# EUROPEAN PATENT APPLICATION

(11) **EP 4 425 735 A1**
(43) Date of publication of application: **04.09.2024**
(21) Application number: 22886570.5
(22) Date of filing: 28.09.2022
(51) Int. Cl.: H02J 7/00, B02C 23/00, B02C 25/00, H02P 25/024, H02P 27/06

(54) **CONTROL SYSTEM**

(30) Priority: 27.10.2021 JP 2021175560; 01.03.2022 JP 2022031212
(71) Applicant: Nakayama Holdings Ltd., Takeo-shi, Saga 843-0001 (JP)
(72) Inventor: NAKAYAMA, Hiroshi, Takeo-shi, Saga 843-0001 (JP); SEZAKI, Tadashi, Takeo-shi, Saga 843-0001 (JP); HIGASHIJIMA, Mitsuo, Takeo-shi, Saga 843-0001 (JP); WATANABE, Yoshinobu, Takeo-shi, Saga 843-0001 (JP); KURAYAMA, Koji, Kirishima-shi, Kagoshima 843-0001 (JP); DAN, Kenichiro, Takeo-shi, Saga 843-0001 (JP); TOMINAGA, Hideki, Takeo-shi, Saga 843-0001 (JP); KITSUKAWA, Tomohiro, Takeo-shi, Saga 843-0001 (JP)
(74) Representative: HGF
(86) International application number: PCT/JP2022/036191
(87) International publication number: WO 2023/074238

(57) **Abstract**

A control system that sets a voltage of a DC bus connected with a secondary battery to an optimal value in accordance with a capacity of a power supply and characteristics of the secondary battery to stabilize a battery voltage of the secondary battery. The control system includes: drive units 11 having at least a crusher that crushes an object to be crushed; inverters 12 that are connected to the respective drive units 11 and convert power to be supplied to the drive units 11; a converter 13 that receives power for driving the drive units 11 from an AC power supply 19 and converts the received power into DC power; a lithium-ion battery 14 that charges the DC power converted by the converter 13 according to a drive state of the drive units 11 or supplies power to the drive units 11 according to the drive state of the drive units 11; and a PLC 15 that sets a conversion voltage of the converter 13 based on a state of the lithium-ion battery 14 and an output capacity of the AC power supply 19.

## Description

### Technical Field

The present invention relates to a control system for efficiently operating drive of construction equipment.

For example, crushers for crushing concrete, stone, or the like include various types of crushers, such as jaw crushers, cone crushers, and impact crushers, depending on the application. Any of these crushers use a motor to crush raw materials with crushing teeth. Further, a crushing system using such a crusher consists of devices such as, for example, a conveyor that transports raw materials such as ore, rock, and concrete, a feeder that supplies the raw materials to the crusher, and a screen that sieves crushed stone. Motors are also used to drive these devices. That is, in general construction equipment including, for example, the above-mentioned crushing system, motor drive control is extremely important.

There are several types of motors. An interior permanent magnet (IPM) motor is known as an AC motor that uses a permanent magnet in a stator. The IPM motor does not require a secondary current to flow through a rotor, thus having the characteristics of suppressing loss in the rotor, saving energy and being highly efficient. Further, less heat generation can reduce its heat dissipation area, enabling the motor itself to be made smaller and lighter. On the other hand, a rotating magnetic field to match the position of the stator needs to be generated, and thus strict control using an inverter is required.

In connection with the above-mentioned crushing system, Patent Literatures 1 and 2 disclose technologies related to a hybrid crusher using a battery power supply and an external AC power supply. The technology described in Patent Literature 1 includes a first connection for supplying power to a first drive unit that is driven in crushing an object to be crushed, a second connection for connecting with an external power supply that supplies power to the first drive unit, a battery power supply that supplies power to the first drive unit at a predetermined timing and charges power from the external power supply, and an inverter circuit that controls power supply from the external power supply as well as power supply from the battery power supply and charging of the battery power supply.

The technology described in Patent Literature 2 discloses a self-travelling crusher that includes a first connection for supplying power to a first drive unit that is driven when the crusher moves from one work place to another, and a battery power supply that supplies power to at least the first drive unit. The crusher controls the first drive unit to be driven only by the power from the battery power supply when moving to another work place through an area where a construction machinery exhaust gas regulation is implemented.

### Citation List

### Patent Literature

Patent Literature 1: Japanese Unexamined Patent Application Publication No. 2021-090262
Patent Literature 2: Japanese Unexamined Patent Application Publication No. 2021-090261

### Summary of Invention

### Technical Problem

Any of the technologies described in Patent Literatures 1 and 2 make it possible to operate the crusher by supplying power from the battery power supply, but when the crusher crushes the object to be crushed, a violent load fluctuation occurs depending on the hardness and amount of the object to be crushed. This causes the drive of the battery power supply to be unstable (that is, a battery voltage fluctuates violently due to such a load fluctuation), and accelerates deterioration of the battery power supply. In particular, when the crusher is operated, various drive units such as a conveyor and a vibration motor operate simultaneously in addition to a crushing unit, so that the load fluctuation becomes larger and the above-mentioned problem is more likely to occur.

Additionally, the technologies described in Patent Literatures 1 and 2 have a function of charging the battery power supply from the external power supply, but when using, as the external power supply, a generator or commercial power supply with different capacities, it is necessary to prepare chargers according to the respective capacities, thus posing a problem of equipment being complicated and expensive.

Further, the technologies described in Patent Literatures 1 and 2 may realize energy-saving and high-efficiency drive operation by applying the IPM motor, but simply replacing a motor with the IPM motor cannot ensure maximum performance of the IPM motor. In particular, when regenerative energy is generated according to a load rapidly fluctuating, a system that does not have the battery power supply needs to be controlled, or even if a system has the battery power supply, this battery power supply needs to be controlled so as to leave a region that can constantly absorb the regenerative energy.

Furthermore, it is necessary to devise setting of the inverter that controls the IPM motor to maximize the performance of the IPM motor.

The present invention has been made to solve the above-mentioned problems. An object of the present invention is to provide a control system that sets a voltage of a DC bus connected with a secondary battery to an optimal value in accordance with a capacity of a power supply and characteristics of the secondary battery to stabilize a battery voltage of the secondary battery, and maximizes performance of an IPM motor while protecting an inverter that controls the IPM motor.

### Solution to Problem

An aspect of the present invention provides a control system including: a drive unit that drives construction equipment; an inverter that is connected to the drive unit and converts power to be supplied to the drive unit; a converter that receives power for driving the drive unit from an AC power supply and converts the received power into DC power; a secondary battery that charges the DC power converted by the converter according to a drive state of the drive unit or supplies power to the drive unit according to the drive state of the drive unit; a PLC that sets a conversion voltage of the converter based on a state of the secondary battery and an output capacity of the AC power supply.

In this way, the control system according to the aspect of the present invention includes: a drive unit that drives construction equipment; an inverter that is connected to the drive unit and converts power to be supplied to the drive unit; a converter that receives power for driving the drive unit from an AC power supply and converts the received power into DC power; a secondary battery that charges the DC power converted by the converter according to a drive state of the drive unit or supplies power to the drive unit according to the drive state of the drive unit; a PLC that sets a conversion voltage of the converter based on a state of the secondary battery and an output capacity of the AC power supply, thus making it possible to set a conversion voltage of the converter within the range of a stable voltage of the secondary battery and extend the service life of the secondary battery.

Further, there is no need to prepare a corresponding charger depending on the capacity of the AC power supply, and it is possible to perform charging without being affected by the capacity of the power supply simply by adjusting a set value of the converter.

### Brief Description of Drawings

FIG. 1 is a system configuration diagram of a control system according to a first embodiment;
FIG. 2 is a functional block diagram showing the configuration of a PLC in the control system according to the first embodiment;
FIG. 3 is a graph showing a voltage fluctuation of a DC bus over time in the case of no-load operation in the control system according to the first embodiment;
FIGS. 4A and 4B are diagrams showing a change of the graph of FIG. 3 in the case of battery deterioration in the control system according to the first embodiment;
FIG. 5 is a system configuration diagram of a control system according to a second embodiment;
FIG. 6 is a diagram showing the configuration of a lithium-ion battery in the control system according to the second embodiment;
FIGS. 7A and 7B are diagrams showing a comparison with conventional data when the drive of a feeder was instantaneously interrupted in the control system according to the second embodiment;
FIGS. 8A and 8B are diagrams showing a comparison with conventional data when a crusher was driven in the control system according to the second embodiment;
FIG. 9 is a schematic diagram showing the configuration of a crushing device in a control system according to a third embodiment;
FIG. 10 is a schematic side view of the installation side of a fluid pressure motor and a flywheel of the crushing device in the control system according to a third embodiment;
FIG. 11 is a diagram showing a controlling system of the crushing device in the control system according to the third embodiment;
FIG. 12 is a diagram showing the state of adjustment of an interval between an immovable tooth and a movable tooth by fluid pressure control means of the crushing device in the control system according to the third embodiment;
FIG. 13 is a graph showing respective changes in a current value of a motor, a pressure applied to a fluid pressure cylinder, and an amount of positional deviation of a toggle block when foreign matter has entered between the immovable tooth and the movable tooth of the crushing device in the control system according to the third embodiment;
FIG. 14 is a diagram showing the state of operation of a swing jaw by the driving of the fluid pressure motor in a state where foreign matter has entered between the immovable tooth and the movable tooth of the crushing device in the control system according to the third embodiment;
FIG. 15 is a diagram showing the state of deviation of the swing jaw away from the immovable tooth associated with the operation of the fluid pressure cylinder in the state where foreign matter has entered between the immovable tooth and the movable tooth of the crushing device in the control system according to the third embodiment;
FIG. 16 is a system configuration diagram of the control system according to the third embodiment; and
FIG. 17 is a diagram showing a control method using the control system according to the third embodiment.

### Description of Embodiments

### (First Embodiment of the Present Invention)

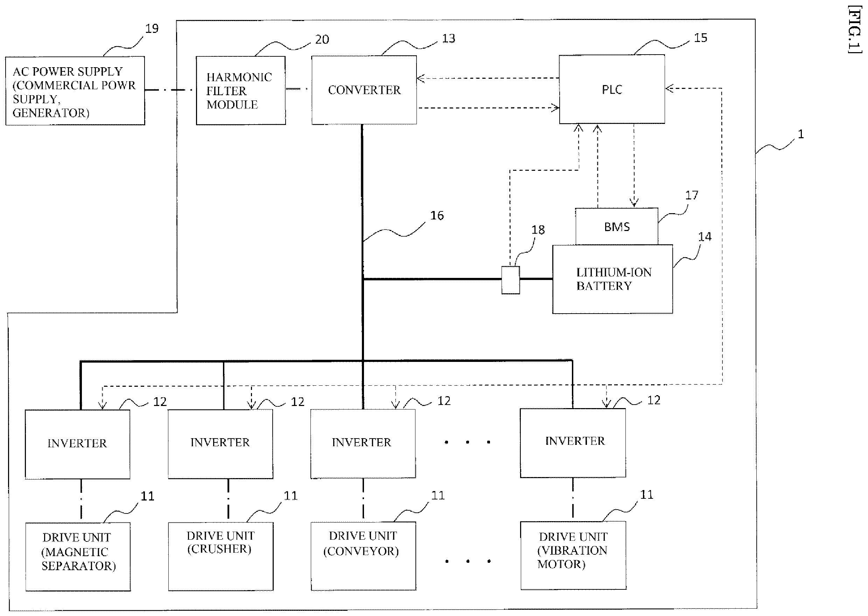

A control system according to the present embodiment will be described with reference to FIGS. 1 to 4B. The control system according to the present embodiment controls a power supply for construction equipment, and more particularly, relates to the power supply control of construction equipment including a hybrid crusher. The hybrid crusher uses, as drive energy, power supplied from an external power supply such as a generator and a commercial power supply, and power supplied from a battery power supply such as a secondary battery, and is provided with power supply from the battery power supply for replenishment in addition to power supply from the external power supply in the case, for example, where the load on a drive unit is large. On the other hand, in the case where the load on the drive unit is small and the external power supply has a margin, surplus power is stored in the battery power supply to effectively utilize energy.

FIG. 1 is a system configuration diagram of the control system according to the present embodiment. The control system 1 includes: drive units 11 that operate mechanically in, for example, a crusher, a conveyor, a vibration motor, a hydraulic pump, a feeder, and a magnetic separator; inverters 12 that are connected to the respective drive units 11 to perform conversion and control of power supplied to the drive units 11; a converter 13 that receives power for driving each drive unit 11 from an external AC power supply 19 and converts it into DC power; a lithium-ion battery 14 that charges the DC power converted by the converter 13 when the drive state of the drive units 11 is a low load state and supplies power to the drive units 11 when the drive state of the drive units 11 is a high load state; and a programmable logic controller (PLC) 15 that sets a conversion voltage of the converter 13 based on a state of the lithium-ion battery 14 and an output capacity of the external AC power supply 19.

The converter 13, the lithium-ion battery 14, and inverters 12 are connected to each other by a DC bus 16. The lithium-ion battery 14 has a battery management system (BMS) 17 for monitoring and controlling its own battery modules, and the BMS 17 and the PLC 15 are connected to enable communication in both directions. The PLC 15 is also connected to the converter 13 and with the inverters 12 to enable communication in both directions. Further, the system is so configured that a measurement unit 18 for measuring voltage is installed on the DC bus 16, enabling the PLC 15 to capture a measurement result of the measurement unit 18.

The external AC power supply 19 is a commercial power supply or a generator, and the voltage thereof varies depending on the contract with an electric power company or the capacity of the generator. It would normally be necessary to install a converter and a charger depending on the power that can be supplied by the commercial power supply or the generator, but in the present embodiment, it is possible to correspond to the external AC power supply 19 rich in variety through a voltage control by the converter 13 regardless of power supply capacity.

The inverters 12 connected to the respective drive units 11 convert the power to be supplied to the respective drive units 11 from DC power to AC power, and perform feedback control according to the drive state of the respective drive units 11. Each drive unit 11 described above has a very large load fluctuation depending on the hardness and amount of crushed materials, so that installing the inverters 12 in the respective drive units 11 can stabilize the operation of each drive unit 11. Since the use of such a large number of inverters 12 raises a concern about the influence of harmonics, the system is so configured that the influence of harmonics is suppressed by providing a harmonic filter module 20 between the converter 13 and the external AC power supply 19.

The lithium-ion battery 14 charges power from the external AC power supply 19 according to the voltage control by the converter 13 when the load on the drive units 11 is small, and supplies the stored power to the drive units 11 to compensate for energy shortage when the load on the drive units 11 is large. The BMS 17 constantly monitors and controls the battery modules of the lithium-ion battery 14, and information on each cell is transmitted to the PLC 15.

Here, as described above, in the present embodiment, the load fluctuation of the respective drive units 11 such as, for example, the crusher is very large depending on the crushed materials, and the noise of the large number of inverters 12 influences the BMS 17 to malfunction. This causes a problem that the battery voltage of the lithium-ion battery 14 varies to accelerate battery deterioration. The BMS 17 has some functions including a function to adjust cell balance, for example, at a low voltage, but in an environment where the load fluctuation of the drive units 11 is very large and the noise of the inverters 12 also has a very large influence as in the present embodiment, it is difficult for the BMS 17 as described above to respond to the situation. Thus, in the present embodiment, it is performed to set the voltage of the DC bus 16 to an appropriate voltage at which the lithium-ion battery 14 can stably operate, and to instruct the BMS 17 to adjust the cell balance at a predetermined timing while checking the crushing status of the crushed materials, under the control of the PLC 15 that can monitor the status of the entire system, as described below.

The PLC 15 has a function of controlling the entire system, and acquires information regarding the status of each battery module in the lithium-ion battery 14 from the BMS 17. Based on the acquired information, the PLC 15 issues a cell balance adjustment command to the BMS 17. On the other hand, the PLC 15 calculates and sets an optimum voltage of the DC bus 16 for the converter 13 based on the status of the lithium-ion battery 14, and calculates and sets an upper limit value of the output. No matter which processing is performed, the load on the drive units 11 causes a large voltage fluctuation and either accurate balance adjustment or optimum voltage calculation cannot be performed, so that the above processing is performed while acquiring information regarding the drive state of each drive unit 11 from the corresponding inverter 12.

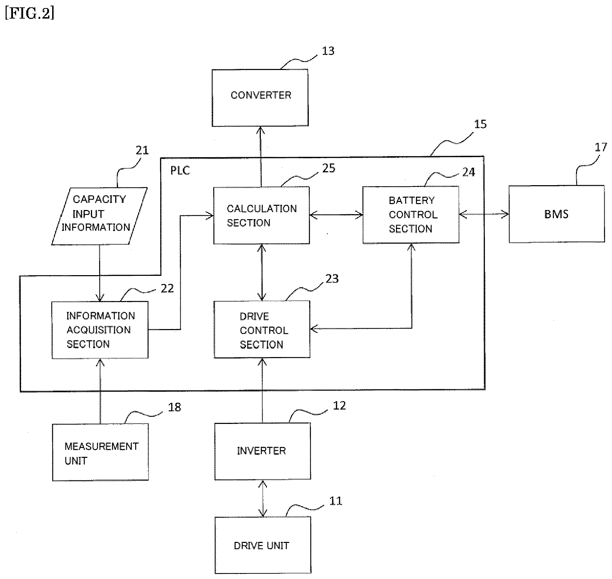

Here, the configuration of the PLC 15 will be described in detail. FIG. 2 is a functional block diagram showing the configuration of the PLC in the control system according to the present embodiment. The PLC 15 includes: an information acquisition section 22 that acquires information such as capacity input information 21 regarding the capacity of the external AC power supply 19 and measurement result information from the measurement unit 18 that measures the voltage of the DC bus 16; a drive control section 23 that monitors and controls the drive state of each drive unit 11; a battery control section 24 that issues commands such as a balance adjustment command to the lithium-ion battery 14 according to the drive state of the drive units 11; a calculation section 25 that measures a stable voltage of the lithium-ion battery 14 while monitoring the drive state of the drive units 11 and calculates information for setting the voltage of the DC bus 16 according to the measured value.

The PLC 15 issues the cell balance adjustment command for the lithium-ion battery 14 while monitoring the drive state of the entire system, and controls the voltage of the DC bus 16 when charging the lithium-ion battery 14, thereby suppressing an excessive burden on the lithium-ion battery 14 to extend service life.

The drive control section 23 is a processing section that monitors and controls the drive state of each drive unit 11. The drive control section 23 determines whether the respective drive units 11 are in a load condition (with the power ON) or in a no-load condition (with the power OFF), based on the information from the inverters 12 connected to the respective drive units 11.

The battery control section 24 transmits information serving as the command for adjusting cell balance to the BMS 17 of the lithium-ion battery 14. As described above, the drive units 11 such as the crusher have a very large load fluctuation depending on the hardness and amount of the crushed materials, and the power consumed also fluctuates greatly accordingly. This influence also extends to each cell of the lithium-ion battery 14, thus easily causing the voltage between the cells to be unbalanced.

It is necessary to adjust the cell balance when the voltage of each cell has been unbalanced, but when the drive units 11 are driven under load conditions, the voltage fluctuation of each cell will be very severe, and thus it is impossible to perform the cell balance adjustment. Consequently, the battery control section 24 receives, from the drive control section 23, the information about whether the drive units 11 are in a load condition or in a no-load condition, and issues the cell balance adjustment command when the drive units 11 are in a no-load condition. Further, when the drive units 11 have been loaded during the cell balance adjustment, the cell balance adjustment cannot be performed accurately, so that the drive control section 23 restricts the operation of each drive unit 11 according to the command from the battery control section 24. Specifically, such restriction includes, for example, controlling the drive units 11 to be in a drive stoppage state (with the power ON), and displaying a warning that cell balancing is in progress on an operation panel and disabling a drive start operation of the drive units 11.

The calculation section 25 performs processing of calculating a voltage upper limit value according to the capacity of the external AC power supply 19 and sending a command to the converter 13. The voltage upper limit value is a value calculated by the calculation section 25 based on an upper limit value that the AC power supply 19 can output. A value of 90% of the output capacity is calculated as the voltage upper limit value, for example. The converter 13 that has received the command of the voltage upper limit value performs the voltage control within that range (i.e., a range that does not exceed the voltage upper limit value). That is, even if the capacity of the external AC power supply 19 varies, the voltage control can be performed according to the respective capacity, thus eliminating the need for preparing devices such as a charger and a converter for different capacities. Note that the output capacity of the external AC power supply 19 is information inputted as the capacity input information 21 by a user's operation, and this information is acquired by the information acquisition section 22 and the voltage upper limit value is calculated by the calculation section 25.

Further, the calculation section 25 determines an optimum voltage value that allows the lithium-ion battery 14 to operate stably with the smallest voltage fluctuation, and sends a command to the converter 13 to control the voltage of the DC bus 16 to the optimum voltage value.

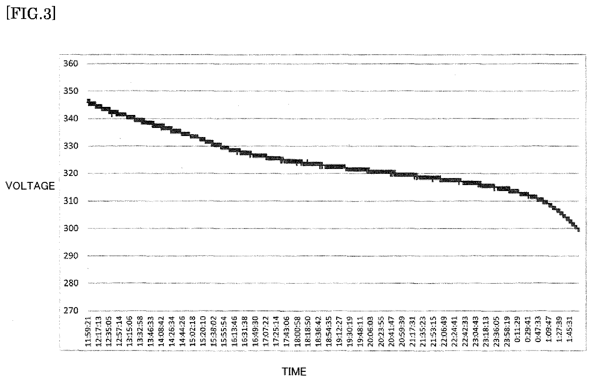

Here, the optimum voltage value will be described. FIG. 3 is a graph showing a voltage fluctuation of the DC bus 16 over time when the drive units 11 are operated in a no-load condition with the power of the lithium-ion battery 14 (when operated in a certain low load condition). The data in this graph was collected when the drive control section 23 had determined that the drive units 11 were in a no-load condition and the battery control section 24 had determined that the battery voltage received from the BMS 17 was 100%. That is, the voltage of the DC bus 16 was measured over time until the battery voltage went from 100% to 0% in a no-load condition. Note that during the collection of the data shown in the graph, the voltage fluctuation of the DC bus 16 increases when the drive units 11 are in a load condition, and thus the drive of the drive units 11 is restricted by the command from the drive control section 23, as in the case described above.

As can be seen from the graph of FIG. 3, in the case of this lithium-ion battery 14, the voltage fluctuation is small between 310 V and 330 V, and it can be seen that the voltage is stable over time particularly around 320 V That is, the calculation section 25 can determine from this graph that the lithium-ion battery 14 is a battery that can be stably driven at a voltage around 320 V, and sets the optimum voltage value to 320 V Once the optimum voltage value is determined, the calculation section 25 sets this optimum voltage value for the converter 13. The converter 13 controls, when the lithium-ion battery 14 is charged from the external AC power supply 19, the conversion voltage such that the voltage of the DC bus 16 has the optimal voltage value within a range that does not exceed the set voltage upper limit value. Such control makes it possible to, even when any one of AC power supplies having various capacities is used, control the voltage of the DC bus 16 to the voltage that allows the lithium-ion battery 14 to be stably driven, and thus quickly charge the lithium-ion battery 14 (rapid charging), and also makes it possible to reduce the burden on the battery to extend service life while keeping a certain value at the optimal voltage against the load fluctuation of the drive units 11.

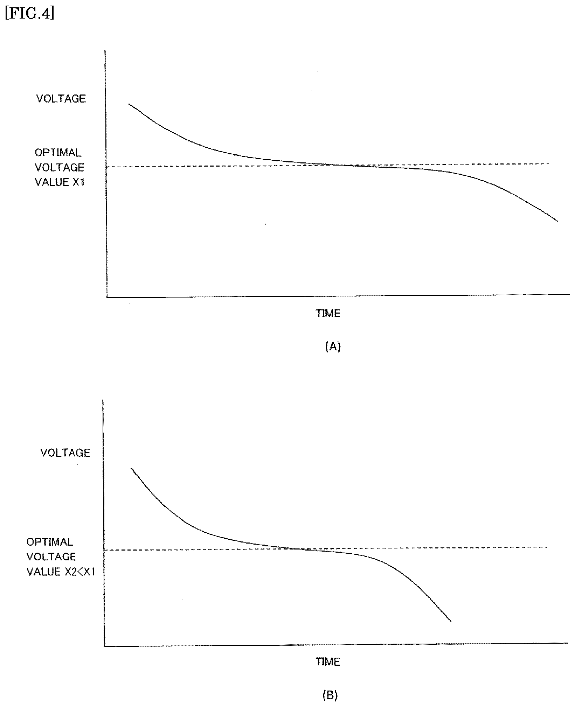

Note that the optimum voltage value may be measured depending on the individual difference of the lithium-ion battery 14, or, if the lithium-ion battery 14 is of the same type (same manufacturer), measured values of one lithium-ion battery 14 may be used as a reference to set the optimum voltage value of the other lithium-ion batteries 14 as a fixed value. In either case, the optimum voltage value changes due to aging of the lithium-ion battery 14. In this case, the drive control section 23 and the battery control section 24 periodically execute processing according to the command from the calculation section 25 such that the operation is performed in a no-load condition with the battery level from 100% to 0%, and new measured values are collected. FIGS. 4A and 4B are diagrams showing a change of the graph of FIG. 3 when the lithium-ion battery 14 has deteriorated. FIG. 4A is a schematic diagram of a graph showing a voltage change of the DC bus 16 when the drive units 11 were operated with no load using the lithium-ion battery 14 before deterioration, and FIG. 4B is a schematic diagram of a graph showing the state after deterioration. As shown in FIGS. 4A and 4B, the drive time when the lithium-ion battery 14 is driven from 100% to 0% and the voltage of the DC bus 16 at that time change due to aging (optimal voltage value X1 before deterioration > optimal voltage value X2 after deterioration), so that the calculation section 25 recalculates the optimum voltage value based on the measured values newly collected, and updates the converter 13 with the optimum voltage value.

Further, in the above, no-load operation is performed until the battery level decreases from 100% to 0%, but for the original capacity of the battery, the rapid charging is possible in the present embodiment, and it is desirable to use the battery mainly in a range from 20% to 80% where the voltage is relatively stable, so that it is desirable to convert the range from 20% to 80% for the original capacity of the battery into a range from 0% to 100%. This conversion may be performed by the calculation section 25.

In this way, the control system according to the present embodiment includes: the drive units 11 including at least the crusher for crushing an object to be crushed; the inverters 12 that are connected to the respective drive units 11 and convert power supplied to the drive units 11; the converter 13 that receives power for driving the drive units 11 from the AC power supply 19 and converts it into DC power; a secondary battery (for example, the lithium-ion battery 14) that charges the DC power converted by the converter 13 according to the drive state of the drive units 11 or supplies power to the drive units 11 according to the drive state of the drive units 11; and the PLC 15 that sets a conversion voltage of the converter 13 based on the state of the secondary battery and the output capacity of the AC power supply 19, thus making it possible to set a conversion voltage of the converter 13 within the range of the stable voltage of the secondary battery and extend the service life of the secondary battery.

Further, there is no need to prepare a corresponding charger depending on the capacity of the AC power supply, and it is possible to perform charging without being affected by the capacity of the power supply simply by adjusting a set value of the converter 13.

Furthermore, the PLC 15 sets the conversion voltage of the converter 13 to a voltage value within a range where the voltage of the lithium-ion battery 14 is less likely to fluctuate, thus making it possible to suppress the burden on the lithium-ion battery 14 and extend the service life of the battery.

Furthermore, the PLC 15 calculates and sets the upper limit value of the conversion voltage of the converter 13 based on the output capacity of the AC power supply 19, thus making it possible to apply various external power supplies without preparing dedicated converters and chargers, regardless of the contract of the commercial power supply or the capacity of the generator, which is the external AC power supply 19.

Furthermore, power is supplied from the secondary battery to the drive units 11 when the power consumption of the drive units 11 exceeds the upper limit value of the conversion voltage of the converter 13, thus making it possible to stably operate the system without stopping it even when the load on the drive units 11 is very large.

Furthermore, the PLC 15 performs balance control between the modules of the secondary battery when the drive units 11 are in a no-load condition, thus making it possible to drive the drive unit 11 with a very large load fluctuation, and to suppress the burden on the secondary battery and extend its service life by regularly adjusting the unbalance between the battery modules caused by noise from the inverters 12. Further, when the drive units 11 are in a load condition, accurate voltage measurement cannot be performed due to a load fluctuation, and balance adjustment cannot be performed, while the balance adjustment is performed when the drive units 11 are in a no-load condition, thus making it possible to perform the balance adjustment with high precision based on the accurate voltage.

### (Second Embodiment of the Present Invention)

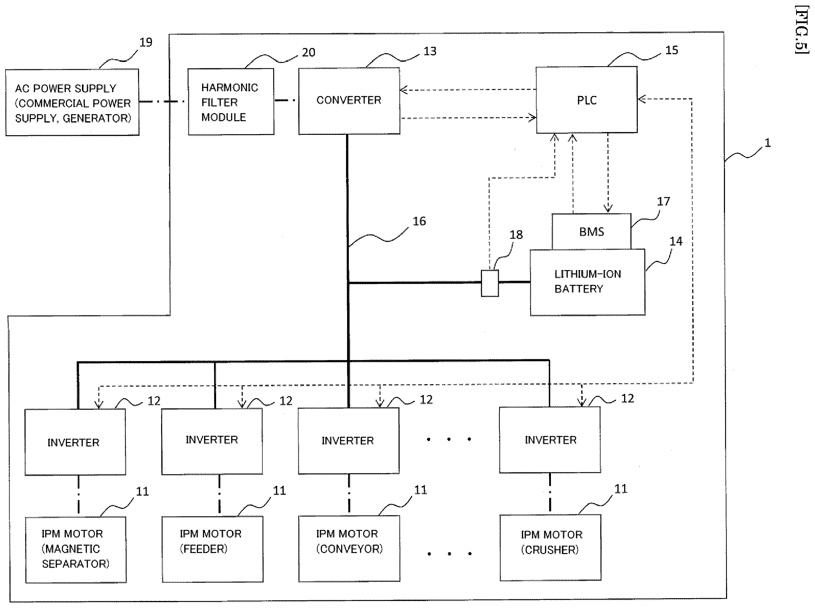

A control system according to the present embodiment will be described with reference to FIGS. 5 to 8B. As in the case of the first embodiment, the control system according to the present embodiment will be described as a drive control system in performing, for example, crushing work using a hybrid crusher, but here will be described as a control system that operate a drive unit(s) of construction equipment with an interior permanent magnet (IPM) motor at high performance while protecting an inverter for controlling the IPM motor. Note that in the present embodiment, descriptions that overlap with those of the first embodiment will be omitted.

FIG. 5 is a system configuration diagram of the control system according to the present embodiment. The control system 1 includes: IPM motors 11a that operate drive units such as a crusher, a conveyor, a feeder, and a magnetic separator; inverters 12 that are connected to the respective IPM motors 11a to perform conversion and control of power supplied to the IPM motors 11a; a converter 13 that receives power for driving each IPM motor 11a from an external AC power supply 19 and converts it into DC power; a lithium-ion battery 14 that charges the DC power converted by the converter 13 when the drive state of the IPM motors 11a is a low load state and supplies power to the IPM motors 11a when the drive state of the IPM motors 11a is a high load state; and a PLC 15 that sets a conversion voltage of the converter 13 based on a state of the lithium-ion battery 14 and an output capacity of the external AC power supply 19.

In FIG. 5, the inverters 12 connected to the respective IPM motors 11a convert the power to be supplied to the respective IPM motors 11a from DC power to AC power, and perform feedback control according to the drive state of the respective IPM motors 11a. Each IPM motor 11a in the construction equipment such as the crusher has a load fluctuation depending on the hardness and amount of crushed materials, so that the inverters 12 are installed in the respective IPM motors 11a to stabilize the operation of the respective IPM motors 11a.

Further, the use of the inverters 12 stabilizes the operation of the IPM motors 11a to some extent under normal operating conditions, but when the load fluctuation is steep and large as in the case of the present embodiment, control by the inverters 12 alone is insufficient and it is difficult to completely stabilize the operation of the IPM motors 11a, and thus the drive of the IPM motors 11a may have to be restricted, making it difficult to maximize the performance of the IPM motors 11a. Specifically, a large amount of regenerative energy is generated, for example, when the IPM motors 11a stop for a short time or when the load suddenly disappears, causing the inverters 12 to be overloaded and causing an error. Thus, in general, it is necessary to protect the IPM motors 11a and the inverters 12 by taking longer time to stop the IPM motors 11a or by limiting the torque and/or rotation speed of the IPM motors 11a so as to prevent the inverters 12 from being overloaded. That is, even if the IPM motors 11a have high performance, this performance must be limited to achieve stable control.

Consequently, in the present embodiment, the lithium-ion battery 14 is provided to absorb the regenerative energy due to the extremely steep load fluctuations on the IPM motors 11a and protect the IPM motors 11a and the inverters 12. During normal operation, the lithium-ion battery 14 charges the power from the external AC power supply 19 according to the voltage control by the converter 13 when the load on the IPM motors 11a is small, and supplies the stored power to the IPM motors 11a to compensate for energy shortage when the load on the IPM motors 11a is large. On the other hand, when the load on the IPM motors 11 has suddenly disappeared, that is, when extremely large regenerative energy has been suddenly generated, the lithium-ion battery 14 absorbs such regenerative energy, thus preventing the inverters 12 from being overload.

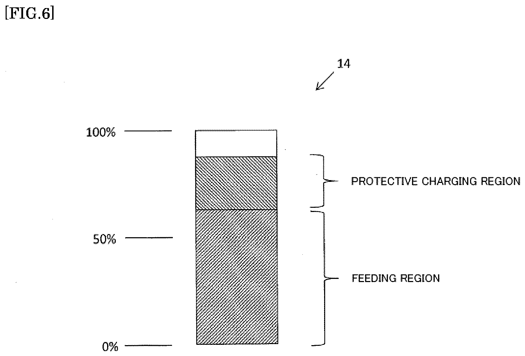

At this time, if the lithium-ion battery 14 is in a fully charged condition, it cannot absorb the regenerative energy generated. Thus, the lithium-ion battery 14 is controlled to be in a state having a feeding region for supplying power to the IPM motors 11a and a protective charging region for absorbing regenerative energy from the IPM motors 11a due to the rapid load fluctuation, as shown in FIG. 6. The power charged in the feeding region is used to compensate for energy shortage when a large load is applied to the IPM motors 11a, and is also used as a region for charging from the external AC power supply 19 when the load on the IPM motors 11a is small. On the other hand, the protective charging region is in an empty state during normal operation, and is used as a region for absorbing steep regenerative energy generated when the load on the IPM motors 11a has suddenly decreased or become zero.

As described above, the lithium-ion battery 14 in the present embodiment needs to be controlled such that it can always sufficiently absorb regenerative energy due to rapid load fluctuations caused in construction equipment such as a crusher. As shown in FIG. 5, a BMS 17 is provided as a processing unit that monitors the lithium-ion battery 14. This BMS 17 performs processing of constantly monitoring and controlling the battery modules of the lithium-ion battery 14, and transmitting information on each cell to the PLC 15. The BMS 17 has some functions including a function to adjust cell balance, for example, at a low voltage, but in an environment where the load fluctuation of the IPM motors 11a is very large and the noise of the inverters 12 also has a very large influence as mentioned above, it is difficult to constantly monitor and control the lithium-ion battery 14 using only the BMS 17. Thus, in the present embodiment, the converter 13 controls the voltage of the DC bus 16 to a voltage at which the lithium-ion battery 14 can constantly absorb the regenerative energy to be steeply generated, based on setting information from the PLC 15 that can monitor the status of the entire system. That is, the converter 13 is made to function as a voltage adjustment means for the DC bus 16.

The PLC 15 has a function of controlling the entire system, and performs processing of calculating and setting an optimum voltage of the DC bus 16 for the converter 13 based on the status of the lithium-ion battery 14, and calculating and setting an upper limit value of the output. That is, the feeding region and the protective charging region are set optimally so as to provide regions for efficiently supplying power to the IPM motors 11a, and at the same time, for absorbing regenerative energy to prevent the inverters 12 from being overloaded when the regenerative energy has been generated. Further, setting the upper limit and lower limit values of the lithium-ion battery 14 results in the extension of a service life of the lithium-ion battery 14.

Further, the PLC 15 acquires information regarding the status of each battery module in the lithium-ion battery 14 from the BMS 17, and issues a cell balance adjustment command to the BMS 17 based on the acquired information. In this case, the load on the IPM motors 11a causes a large voltage fluctuation and either accurate balance adjustment or optimum voltage calculation cannot be performed, so that the above processing is performed while acquiring information regarding the drive state of each IPM motor 11a from the corresponding inverter 12.

As described above, since the regenerative energy by the IPM motor 11a is absorbed by the lithium-ion battery 14, the lithium-ion battery 14 can function as a protection circuit for the inverter 12. The voltage value and/or frequency for controlling the IPM motor 11a by the corresponding inverter 12 can be set to an upper limit value. That is, the function of the IPM motor 11a can be maximized without being restricted.

Here, processing when the feeder is controlled by the drive control system according to the present embodiment will be described specifically. The feeder to be electrically driven adjusts the input of an object to be crushed into the crusher with the frequency controlled by the corresponding inverter 12. When the object to be crushed is large or hard, the load on the crusher increases. In other words, the load on the IPM motor 11a that drives the crusher increases. When the load on the IPM motor 11a increases, the feeder is decelerated and stopped under the control of the corresponding inverter 12 to reduce the supply of the object to be crushed and prevent the IPM motor 11a of the crusher from being overloaded.

In the case of an absence of the lithium-ion battery 14 or in the case of the presence of the lithium-ion battery 14 but without the protective charging region set, reducing and stopping the frequency of the feeder for a short time will generate the steep regenerative energy, causing the inverter 12 to be overloaded and causing an error. Further, in the case where a V-belt is used as a power transmission means for the feeder, the V-belt will be loose structurally when raw materials are fed into the feeder, resulting in instantaneous overvoltage. Since it is difficult to detect raw material input timing with mechanical or electrical signals, a phenomenon in which such overvoltage occurs in the inverter 12 of the IPM motor 11a for driving the feeder will also occur. To solve these problems, the protective charging region is set in the lithium-ion battery 14 as shown in the configuration shown in FIG. 6, thereby making it possible to absorb the regenerative energy to be steeply generated. This enables the feeder to be decelerated and stopped in an extremely short time without causing an error.

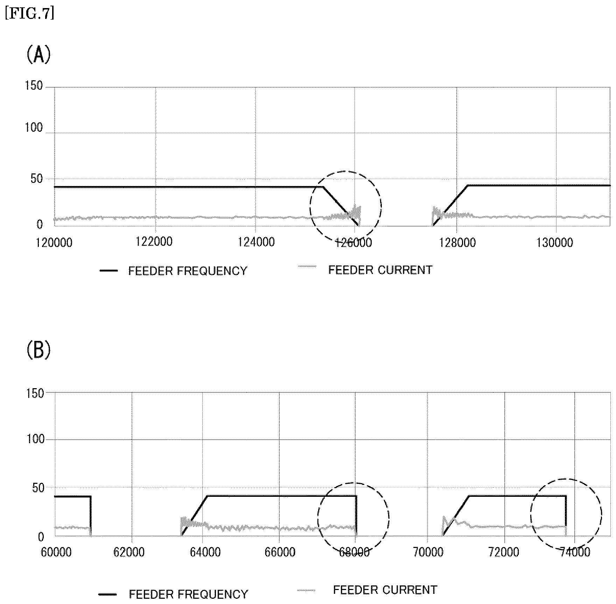

FIGS. 7A and 7B show results obtained when the drive of the feeder was in fact interrupted instantaneously. FIG. 7A shows a result indicating a change in rotation speed with respect to downtime of the feeder in a conventional method, and FIG. 7B shows a result indicating a change in rotation speed with respect to downtime of the feeder in the present embodiment. As is clear from FIGS. 7A and 7B, in the case of the present embodiment, the entire system can be kept driven even when the feeder was instantaneously stopped while the entire system was in operation. That is, in the conventional method, a certain amount of time was required to decelerate and stop the feeder, so that it was necessary to perform control early at operator's discretion, but in the present embodiment, the feeder can be decelerated and stopped instantaneously, so that it is possible to increase operational efficiency while suppressing wasteful current generation during the stop.

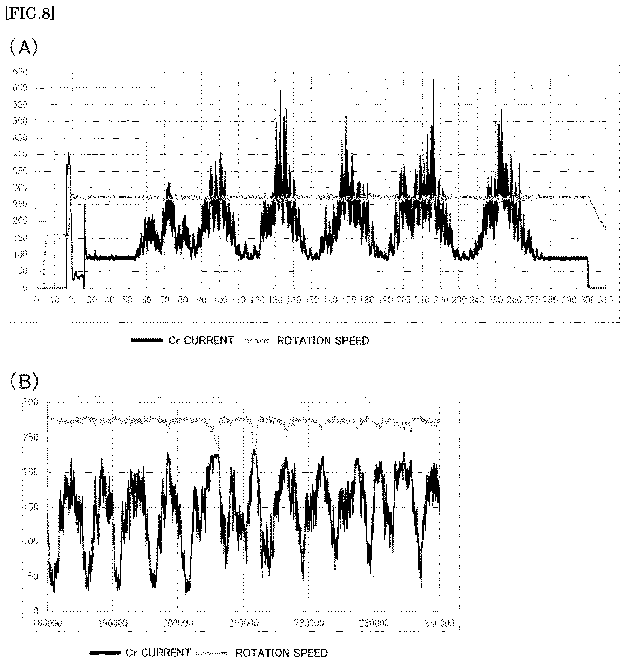

Further, processing when the crusher is controlled by the drive control system according to the present embodiment will be described specifically. Conventional electrically driven crushers are generally driven using three-phase squirrel cage or wound wire motors. FIGS. 8A and 8B shows results obtained when the crusher (jaw crusher) was driven in fact. FIG. 8A shows data when the crusher was driven using a conventional three-phase motor, and FIG. 8B shows data when the crusher was driven by the IPM motor 11a in the present embodiment. Specifically, FIG. 8B shows the driving of the IPM motor 11a under the control of the corresponding inverter 12 in the configuration including the lithium-ion battery 14.

As can be seen from the data in FIGS. 8A and 8B, for the case of present embodiment, the current fluctuation was reduced and the stability was high, and the no-load current was reduced in about half (with normalized value reduced from about 100 to about 50), compared to the case of the conventional three-phase motor. Further, also in load, it is possible to perform crushing with a lower current (with normalized value reduced from about between 350 and 600 to about 200) compared to the conventional method. More specifically, in the conventional crusher, the limit was to drive it at a set value of 90 mm, but in the present embodiment, it is possible to drive the crusher sufficiently at a set value of 60 mm, enabling the crushing operation with extremely high efficiency using a lower power supply than before.

In addition, for controlling the crusher, it may be possible to drive a flywheel by the IPM motor 11a such that regenerative energy due to a load fluctuation applied to crushing teeth that are driven in accordance with the operation of the flywheel is absorbed by the lithium-ion battery 14.

In this way, the drive control system according to the present embodiment can prevent, for example, the inverters 12 from being overloaded due to the regenerative energy caused by the rapid load fluctuations, and protect the inverters 12. Further, since the lithium-ion battery 14 absorbs the regenerative energy to protect the inverters 12, it is possible to widely set the set values of the inverters 12 and maximize the performance of the IPM motors 11a.

### (Third Embodiment of the Present Invention)

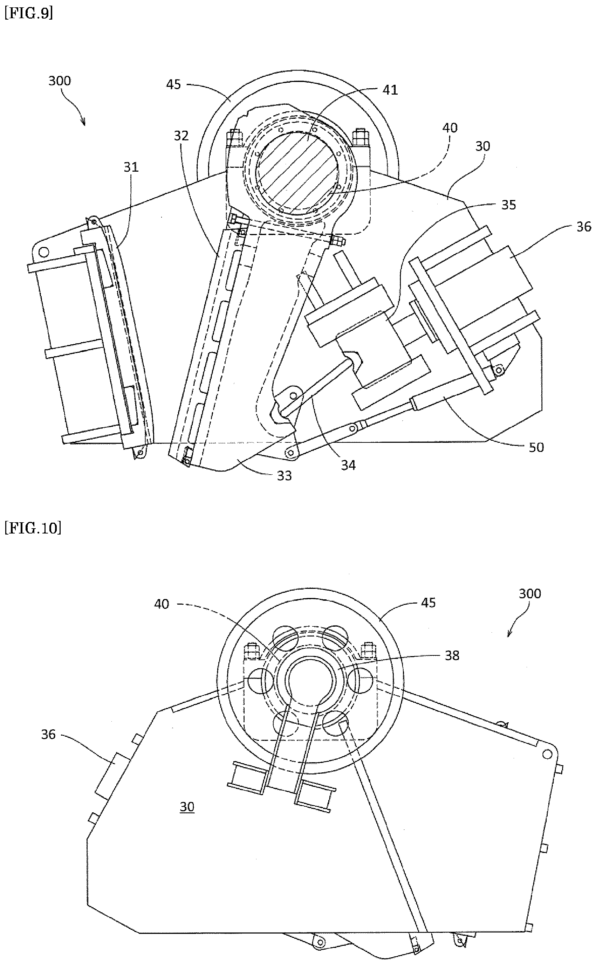

A control system according to the present embodiment will be explained with reference to FIGS. FIGS. 9 to 17. In the present embodiment, control when a jaw crusher is used as the construction equipment will be described. Note that in the present embodiment, descriptions that overlap with those of the above embodiments will be omitted.

Jaw crushers have been conventionally used as crushing devices for crushing stone, concrete waste, asphalt waste, or the like into desired sizes. Such a jaw crusher is configured to move a movable tooth attached to a swing jaw with respect to a fixed immovable tooth, and crush an object to be crushed introduced between the immovable and movable teeth by sandwiching it between the immovable and movable teeth.

A widely used single toggle type jaw crusher of the conventional jaw crushers usually has a rotation shaft that is rotatably driven by, for example, an electric motor or a hydraulic motor pivotally supported on the jaw crusher body frame that fixedly supports the immovable tooth. The swing jaw is supported with its upper portion relatively rotatably attached to an eccentric shaft part that is integrally provided to the rotation shaft with its shaft center shifted from that of the rotation shaft.

Further, the lower part of the swing jaw is in contact with one end of a toggle plate that is separately provided in a swingable manner on the main body frame, and the swing jaw can relatively swing with respect to the toggle plate in a state where the toggle plate and the swing jaw maintain contact without separating from each other. This forms a link mechanism in which the eccentric shaft part, the swing jaw, the toggle plate, and the main body frame are arranged such that the main body frame is a stationary node, the eccentric shaft part is a driving node, and the swing jaw is a driven node. This mechanism can repeatedly generate a predetermined motion, including the swing of the swing jaw, which moves the swing jaw closer to and away from the immovable tooth.

The toggle plate has one end in contact with the lower part of the swing jaw, and the other end of the toggle plate, opposite to the one end in contact with the swing jaw, is positioned by a receiving member such as a toggle block provided on the main body frame. Adjusting the position of the receiving member (toggle block) and changing the swing center position of the toggle plate on the main body frame allow the relative position of the swing jaw with respect to the immovable tooth to be adjusted forward and backward, making it possible to adjust a gap between the movable tooth attached to the swing jaw and the immovable tooth in accordance with the particle size distribution of crushed pieces desired to be obtained by crushing the object to be crushed. Reference Document 1 (Japanese Unexamined Patent Publication No. 2001-70810) discloses an example of conventional such jaw crushers capable of adjusting the gap between the movable tooth and the immovable tooth.

Conventional jaw crushers have such a configuration as exemplified in Reference Document 1 mentioned above. When foreign matter such as metal is fed between the immovable tooth and the movable tooth, such a crusher cannot crush the foreign matter and is thus overloaded, leading to defects such as breakage of the device if the crushing is just continued. Thus, such a mechanism to detect an overload condition and stop the device has been introduced.

For a jaw crusher, of such conventional jaw crushers, in which the rotation shaft for moving the swing jaw is driven by an electric motor, it has been common practice to detect the overload condition where the foreign matter such as metal cannot be crushed based on a current value of the electric motor, utilizing the fact that when the load increases, the current flowing through the electric motor being a driving source also increases. However, since the overload condition is detected based on the current value of the electric motor, if a current threshold for stopping the electric motor in response to the overload is set low, the current value of the electric motor increases at peak load and exceeds the threshold, causing false detection of overload, frequently causing the electric motor to be stopped and the crushing to be interrupted, in the case where, for example, the object to be crushed, such as stone that should been originally crushed, is hard and difficult to break. In addition to this problem, each time the electric motor is stopped, to restart the electric motor, it is necessary, for example, to remove the remaining object to be crushed, which obstructs the electric motor's restart, from between the immovable tooth and the movable tooth. This takes time to recover, reducing efficiency of crushing work.

In contrast, in the case where, if the object to be crushed is hard, the threshold value is set high such that the current value of the electric motor does not exceed the threshold corresponding to overload if it increases due to the load related to crushing, the timing of detecting overload is delayed in the load increase due to uncrushable foreign matter as well, thereby taking time before the device stops, and thus causing defects due to the operation of the device for a while in the overloaded state as it is (for example, bent of the toggle plate and breakage of a bearing) to be likely to occur. Parts where the defects such as damage and breakage thus occur due to the delay in stopping are often the main parts of the device that take time to recover. This also leads to a significant reduction in the efficiency of the crushing work.

On the other hand, for a jaw crusher in which the rotation shaft is driven by a hydraulic motor, an increase in load appears as an increase in hydraulic pressure in a hydraulic circuit including the hydraulic motor, so that a hydraulic control mechanism that detects overload in response to the increase in hydraulic pressure accompanying the increase in load and stops the drive has been adopted to realize a mechanism that can quickly detect overload and stop crushing. Further, in the case of the hydraulic drive, there have been the following merits: the situation in which the load increases abnormally as in the case of the electric motor is unlikely to occur by its nature, and additionally, torque at startup is easier to generate compared to the case of the electric motor, enabling quick start after stopping. However, such a device driven by the hydraulic motor has a complicated and large-scale drive mechanism, involving a cost as a device, and additionally, needs to constantly operate a hydraulic pump to generate hydraulic pressure, increasing a running cost as well.

Thus, in the present embodiment, a control system when using a crushing device that reliably keep and continue a state in which an object to be crushed is properly crushed, by controlling an adjustment unit according to the load on the movable tooth to temporarily increase an interval between the immovable tooth and the movable tooth, and after the object to be crushed is crushed or foreign matter is discharged, returning the interval between the immovable tooth and movable tooth to its original state by the adjustment unit to ensure a crushable state, will be described.

A crushing device used in the control system according to the present embodiment will be described with reference to FIGS. 9 to 15. In the present embodiment, an example of a single toggle type jaw crusher will be described.

In the respective figures as mentioned above, a crushing device 300 according to the present embodiment includes: an immovable tooth 31 that is fixed to a main body frame 30; a movable tooth 32 that is disposed opposite to the immovable tooth 31; a swing jaw 33 to which the movable tooth 32 is attached and that is at least swingably disposed on the main body frame 30; a fluid pressure cylinder 36, as the adjustment unit, that positions a movable range of the swing jaw 33 with respect to the main body frame 30 and enables adjustment of an interval between the immovable tooth 31 and the movable tooth 32; an electric motor 37 that moves the swing jaw 33 and the movable tooth 32; a fluid pressure motor 38 that can move the swing jaw 33 separately from the electric motor 37; and a control unit 39 that controls the fluid pressure cylinder 36, the electric motor 37, and the fluid pressure motor 38 in response to a fluctuation of the load on the movable tooth 32 during crushing.

This crushing device 300 moves the movable tooth 32 together with the swing jaw 33 with respect to the fixed immovable tooth 31 to periodically change the interval between the immovable tooth 31 and the movable tooth 32 and crush an object to be crushed that is supplied and introduced between the immovable tooth 31 and the movable tooth 32.

The crushing device 300 further includes, as a mechanism for moving the swing jaw 33: a toggle plate 34 that is provided such that one end thereof is in contact with a lower part of the swing jaw 33; and a toggle block 35 that is provided in the main body frame 30 with its position adjustable so as to be in contact with the other end of the toggle plate 34.

Mechanisms of such units of the crushing device are similar to those of the known single toggle type jaw crusher, except for a support structure of the toggle block 35 in the main body frame 30, a fluid pressure circuit that operates the fluid pressure cylinder 36, and the control unit 39 that controls the fluid pressure cylinder 36 and the like, and detailed descriptions thereof will be omitted.

The immovable tooth 31 and the movable tooth 32 are each formed into a flat plate shape, whose surface is a protrusion surface in which a plurality of protrusions is arranged in parallel to form a wavy cross section. The immovable tooth 31 is disposed opposite to the movable tooth 32 attached to the swing jaw 33. Then, a crushing space is formed between the immovable tooth 31 and the movable tooth 32, which is narrow at the bottom and wide at the top.

The main body frame 30 has a highly rigid three-dimensional structure made of, for example, a metal framework or plate assembly, and is installed in a fixed state on stable ground or a floor surface, or sometimes mounted on a self-propelled trolley. This main body frame 30 supports the immovable tooth 31 and the swing jaw 33 to which the movable tooth 32 is attached.

A rotation shaft 40 for supporting the swing jaw 33 is rotatably supported on the upper part of the main body frame 30. An eccentric shaft part 41 eccentric from the center of the rotation shaft is integrally provided on the rotation shaft 40, and an upper end of the swing jaw 33 is attached to be relatively rotatable around the eccentric shaft part 41. A flywheel 45 and a pulley (not shown) to which a driving force from the electric motor 37 is transmitted via an endless belt are attached to an end of the rotation shaft 40, as in the case of the known jaw crushers.

The rotation shaft 40 is rotationally driven by the electric motor 37 during normal crushing. When an excessive current may flow through the motor due to a large load at the time such as during startup, the rotation shaft 40 is driven by the fluid pressure motor 38, and after the rotation speed increases, the drive by the fluid pressure motor 38 is switched to the drive by the electric motor 37.

The swing jaw 33 has its upper portion supported by the eccentric shaft part 41 of the rotation shaft 40, and on the other hand, is biased away from the immovable tooth 31 by a tension rod 50 connected to its lower end.

The swing jaw 33 has its upper portion supported by the eccentric shaft part 41 of the rotation shaft 40, and on the other hand, has its lower recessed portion in contact with the one end of the toggle plate 34 separately provided in a swingable manner on the main body frame 30, and is biased away from the immovable tooth 31 by the tension rod 50 connected to its lower end so as to maintain such contact.

The toggle plate 34 is a substantially rectangular plate made of metal, and is disposed parallel to an axial direction of the rotation shaft 40 (front direction in FIG. 10) (see FIG. 10). One end of this toggle plate 34 is in contact with the lower recessed portion of the swing jaw 33 in a swingable manner.

The toggle block 35 is disposed on the main body frame 30 such that it is restrained in its movable direction by a part of the main body frame 30 to move forward and backward with respect to the swing jaw 33, and it is connected to the fluid pressure cylinder 36 and does not normally move. The other end of the toggle plate 34 is swingably in contact with a recess provided in the toggle block 35.

Biasing the swing jaw 33 away from the immovable tooth 31 positions the toggle plate 34 between the swing jaw 33 and the toggle block 35, and brings the swing jaw 33 and the toggle block 35 into contact with one end of the toggle plate 34 and the other end of the toggle plate 34, respectively, maintaining a state in which the swing jaw 33 and the one end of the toggle plate 34 as well as the toggle block 35 and the other end of the toggle plate 34 are not separated from each other, respectively. This allows the swing jaw 33, the toggle plate 34, the main body frame 30, and the rotation shaft 40 to constitute a type of link mechanism.

When the rotation shaft 40 is rotated by the drive of the electric motor 37 or the fluid pressure motor 38, the swing jaw 33 repeats predetermined motion of moving toward and away from the immovable tooth 31, accompanying not only swing but also vertical movement, based on the characteristics of the link mechanism.

The fluid pressure cylinder 36 is disposed, as the adjustment unit, at a predetermined location of the main body frame 30, opposite to the side where the immovable tooth 31 is located with respect to the swing jaw 33, and has one end attached to an end of the toggle block 35 and the other end attached to an end of the main body frame 30. An interval between the one end and the other end of the fluid pressure cylinder 36 is variable by fluid pressure control. An interval between the immovable tooth 31 and the movable tooth 32 can be adjusted by adjusting the position of the toggle block 35 relative to the main body frame 30 and positioning the swing jaw 33 linked to such adjustment and the movable tooth 32 integrated therewith with respect to the main body frame 30.

A plurality (for example, three) of the fluid pressure cylinders 36 are disposed side by side parallel to an axial direction of the rotation shaft 40 at portions, of the main body frame 30, opposite to the side where the immovable tooth 31 is located with respect to the swing jaw 33.

Adjustment of the gap between the immovable tooth 31 and the movable tooth 32, which is related to the particle size of crushed pieces desired to be obtained by crushing the object to be crushed by the crushing device, has the procedure of: moving the swing jaw 33 and the movable tooth 32 via the toggle plate 34, by adjusting the position of the toggle block 35 with the fluid pressure cylinder 36; stopping the fluid pressure cylinder 36 to be in a stationary state, at a position where a predetermined gap corresponding to the size of the desired crushed pieces is obtained; and fixing the toggle block 35 on the main body frame 30.

Further, in abnormal situations where crushing is obstructed between the immovable tooth 31 and the movable tooth 32, that is, when the load on the movable tooth 32 increases due to the presence of an object to be crushed that can be crushed but is difficult to crush, or foreign matter that cannot be crushed, during crushing, the fluid pressure cylinder 36 reduces an interval between one end and the other end thereof to move the toggle block 35 away from the immovable tooth 31, temporarily increasing the interval between the immovable tooth 31 and the movable tooth 32, then facilitating the crushing of the obj ect to be crushed and/or the removal of the foreign matter from between the immovable tooth 31 and the movable tooth 32.

The electric motor 37 is disposed at a location away from the rotation shaft 40, and transmits the driving force to the pulley located at the end of the rotation shaft 40 via the endless belt to rotationally drive the rotation shaft 40 and then move the swing jaw 33 and the movable tooth 32 attached thereto.

The fluid pressure motor 38 is attached to the upper part of the main body frame 30, and has its output shaft connected to the rotation shaft 40 via the flywheel 45 located at the end of the rotation shaft 40 to rotationally drive the rotation shaft 40 separately from the electric motor 37 and then move the swing jaw 33 and the movable tooth 32 attached thereto.

This fluid pressure motor 38 repeats forward and reverse rotation of the rotation shaft 40 in small increments under the control of the control unit 39 when the load on the movable tooth 32 increases due to uncrushable foreign matter during crushing and the crushing is interrupted. Such forward and reverse rotation moves the swing jaw 33, causing the interval between the immovable tooth 31 and the movable tooth 32 to change repeatedly.

The control unit 39 controls the fluid pressure cylinder 36 as the adjustment unit as well as the electric motor 37 and the fluid pressure motor 38 that move the swing jaw 33 and the movable tooth 32 in response to the fluctuation of the load on the movable tooth 32 during crushing.

When the load on the movable tooth 32 increases due to a crushable object to be crushed or uncrushable foreign matter existing between the immovable tooth 31 and the movable tooth 32 during crushing, the control unit 39 controls the fluid pressure cylinder 36 to reduce the interval between the one end and the other end thereof to move the swing jaw 33 and then increase the interval between the immovable tooth 31 and the movable tooth 32 to reduce the load. After the object to be crushed has been crushed, or after the foreign matter has been removed from between the immovable tooth 31 and the movable tooth 32, either one being cause of the load increase, the fluid pressure cylinder 36 is returned to its original state.

More specifically, the control unit 39 includes a fluid pressure control means 39a, an electric motor control means 39b, and a fluid pressure control mechanism section 39c. When, during crushing, the load on the movable tooth 32 increases due to the crushable object to be crushed, and a force to reduce the interval between the one end and the other end of the fluid pressure cylinder 36 through the swing jaw 33 increases, and then fluid pressure in a fluid pressure circuit leading to the fluid pressure cylinder 36 increases, the fluid pressure control means 39a controls a working fluid via the fluid pressure circuit so as to accompany temporal reduction of the interval between the one end and the other end of the fluid pressure cylinder, making it possible to suppress the load on the movable tooth.

Such a fluid pressure control means 39a can be, for example, an accumulator provided in communication with a flow path on the side where the fluid pressure increases as the fluid pressure cylinder 36 operates in a contraction direction (for example, in the case of a double-acting single rod type fluid pressure cylinder, a flow path leading to a cylinder chamber on its cap side) in the fluid pressure circuit. When the accumulator is used, elimination of the temporary increase in fluid pressure in the fluid pressure circuit leading to the fluid pressure cylinder 36 due to the load increase allows the working fluid once taken in to be returned to the flow path of the fluid pressure circuit and the fluid pressure cylinder 36 to return to its original state as it is. This eliminates the need for adjusting the setting of the interval between the one end and the other end of the fluid pressure cylinder 36 and the setting of the holding pressure by the fluid pressure cylinder 36, which are related to the positioning of the swing jaw 33, thus reducing the effort and cost associated with such adjustments.

Besides this, other control means may be used as long as they allow a part of the working fluid to be temporarily released to the outside of the flow path of the fluid pressure circuit and the fluid pressure cylinder to operate in the contraction direction when the fluid pressure in the fluid pressure circuit leading to the fluid pressure cylinder 36 increases, and on the other hand, allow a part of the released working fluid to be promptly returned to the flow path of the fluid pressure circuit when the fluid pressure decreases, as in the case of the accumulator.

The electric motor control means 39b detects the current flowing through the electric motor 37. When the detected current value satisfies a predetermined condition set in advance corresponding to a situation where uncrushable foreign matter enters between the immovable tooth 31 and the movable tooth 32 and the movable tooth is overloaded (for example, the current value exceeds a threshold value set corresponding to the overload), the motor control means 39b stops the drive of the electric motor 37. On the other hand, when the detected current value does not satisfy the above condition, the electric motor 37 continues the drive of the electric motor 37.

Besides this, the electric motor control means 39b may stop the feeder (not shown) that is provided in the front stage of the crushing device 300 and supplies objects to be crushed to the crushing device 300, in addition to stopping the drive of the electric motor 37.

In contrast to such electric motor control means 39b, the fluid pressure control means 39a controls, when the load on the movable tooth 32 increases transiently due to crushable objects to be crushed, the working fluid to temporarily reduce the interval between the one end and the other end of the fluid pressure cylinder 36 to such an extent that the current value of the electric motor 37 detected by the electric motor control means 39b does not reach a state that satisfies the above condition, thereby reducing the load.

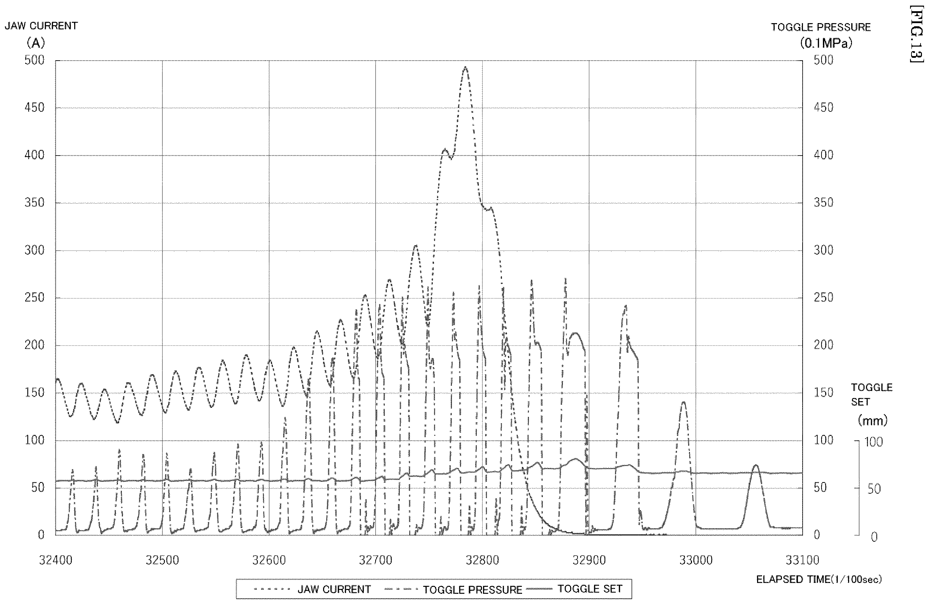

For example, the condition corresponding to an overload assumes that a state in which a current value flowing through the electric motor 37 exceeds 300 A continues for 0.6 seconds. As shown in FIG. 13, before the time when approximately 327 seconds had elapsed from the start of operation, which was the time when the uncrushable foreign matter was in fact caught between the immovable tooth 31 and the movable tooth 32 to cause a problem in the movement of the movable tooth 32, the load on the movable tooth 32 might have increased transiently due to the object to be crushed to cause the pressure (toggle pressure) applied to the fluid pressure cylinder 36 to increase to a peak, but in fact the interval between the one end and the other end of the fluid pressure cylinder 36 was temporarily reduced by the action of the fluid pressure control means 39a to change a positional relationship between the toggle block 35 and the immovable tooth 31 indicated as a toggle set and separate the swing jaw 33 and the movable tooth 32 from the immovable tooth 31, thereby reducing the load on the movable tooth to prevent the current value (jaw current) of the electric motor 37 from satisfying the above condition corresponding to the overload situation.

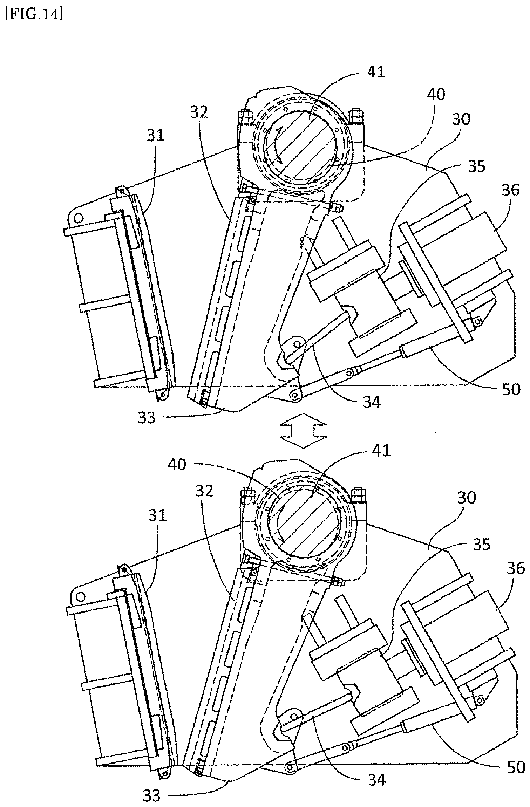

The fluid pressure control mechanism section 39c forms a main part of the fluid pressure circuit and controls the operation of the fluid pressure cylinder 36 and the fluid pressure motor 38. When the load on the movable tooth increases due to uncrushable foreign matter, the control unit 39 stops the drive of the swing jaw 33 by the electric motor 37 through the rotation shaft, and at the same time, by the fluid pressure control mechanism section 39c, causes the fluid pressure motor 38 to rotate the rotation shaft 40 in forward and reverse directions to move the swing jaw 33, repeatedly changing the interval between the immovable tooth 31 and the movable tooth 32 (see FIG. 14), before the interval between the immovable tooth 31 and the movable tooth 32 is increased by the fluid pressure cylinder 36.

Thus, the foreign matter causing the load increase between the immovable tooth 31 and the movable tooth 32 is easily removed from between the immovable tooth 31 and the movable tooth 32. In this case, the purpose is to remove the foreign matter, and the torque at startup is important, while there is no problem even at a lower rotation speed than in the case of normal crushing if the rotation shaft 40 can be rotated in forward and reverse directions, so that the fluid pressure motor 38 does not need to have the ability to handle crushing, and the fluid pressure motor 38 and the fluid pressure circuit for operating the same can be made small.

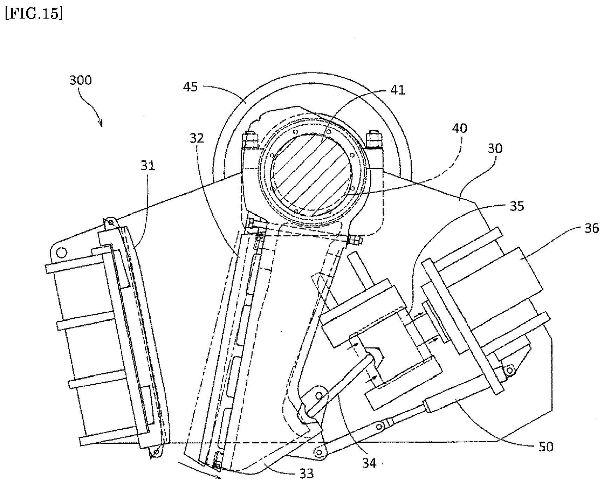

Further, when the foreign matter is not removed from between the immovable tooth 31 and the movable tooth 32 if the fluid pressure motor 38 is operated, the fluid pressure control mechanism section 39c stops the fluid pressure motor 38 and reduces the interval between the one end and the other end of the fluid pressure cylinder 36 to move the swing jaw 33 and increase the interval between the immovable tooth 31 and the movable tooth 32 (see FIG. 15). After the foreign matter causing the load increase is removed from between the immovable tooth 31 and the movable tooth 32, the fluid pressure cylinder 36 is returned to its original state.

Next, how the crushing device responds in overload during operation based on the above configuration will be described. It is assumed that with respect to an object to be crushed, the crushing device 300 can smoothly move the swing jaw 33 with the drive by the electric motor 37, and continuously crush the object to be crushed between the immovable tooth 31 and the movable tooth 32 without any trouble.

Further, it is assumed that before the object to be crushed is crushed, the gap between the immovable tooth 31 and the movable tooth 32 is adjusted in advance. In this gap adjustment, the gap between the immovable tooth 31 and the movable tooth 32 is adjusted to have a value corresponding to the size of crushed pieces desired to be obtained, by operating the fluid pressure cylinder 36 to move the toggle block 35 relative to the main body frame 30, and also moving the swing jaw 33 linked to such movement via the toggle plate 34 as well as the movable tooth 32 integrated therewith, under the control of the control unit 39. When the size of the gap between the immovable tooth 31 and the movable tooth 32 reaches a desired value, adjusting of the position (moving) of the toggle block 35 by the fluid pressure cylinder 36 stops, and the adjustment is completed.

In the crushing process after completion of the gap adjustment, the rotation shaft 40 is first rotationally driven by the fluid pressure motor 38 to start the crushing operation of the crushing device. When the rotation shaft 40 reaches an appropriate rotation speed, the rotation shaft 40 is switched to a state in which it is rotationally driven by the electric motor 37, and the drive by the fluid pressure motor 38 is stopped. Such rotation of the rotation shaft 40 causes the swing jaw 33 to repeat the predetermined motion of moving toward and away from the immovable tooth 31 together with the movable tooth 32.

A feeder (not shown) for supplying the object to be crushed to the crushing device 300 is provided on the upper side of the crushing device 300 that performs crushing. By this feeder, the object to be crushed is supplied and introduced into a crushing space between the immovable tooth 31 and the movable tooth 32.

The object to be crushed that has been put between the immovable tooth 31 and the movable tooth 32 and sandwiched between the immovable tooth 31 and the movable tooth 32, receives a clamping force from the immovable tooth 31 and the movable tooth 32 due to the movement of the swing jaw 33. This pressure causes stress concentration in a part of the object to be crushed, and the object to be crushed is crushed and divided starting from the stress concentration point.

The object to be crushed is crushed by the crushing force and reduced in particle size while moving from top to bottom through the crushing space between the immovable tooth 31 and the movable tooth 32. This process is repeated and then finally, the crushed pieces of a desired size are discharged from the lower end (discharge port) of the gap between the immovable tooth 31 and the movable tooth 32.

During such an operation of the crushing device, the load on the movable tooth 32 that moves to perform crushing will be a rotational load on the rotation shaft 40 that drives the movable tooth 32 together with the swing jaw 33, which is reflected as a value of the current flowing through the electric motor 37. This current value is monitored by the electric motor control means 39b of the control unit 39. Further, an increase in such a load on the movable tooth 32 acts on the swing jaw 33 as an apparent force to increase the interval between the immovable tooth 31 and the movable tooth 32, and further acts as a force to compress the fluid pressure cylinder 36 through the toggle plate 34 and toggle block 35 that support the swing jaw 33 from behind, causing an increase in the fluid pressure of the working fluid in a part of the fluid pressure circuit including the fluid pressure cylinder 36. Such an increase in fluid pressure in the fluid pressure circuit is reflected in the fluid pressure control means 39a of the control unit 39.

Further, when during this operation the load on the movable tooth 32 increases because a crushable object to be crushed is not smoothly crushed or uncrushable foreign object exists between the immovable tooth 31 and the movable tooth 32, the crushing-related movements of the movable tooth 32 and the swing jaw 33 are obstructed, thereby leading to an abnormal rotational load on the rotation shaft 40 that cannot move the swing jaw 33 properly, and increasing the current value of the electric motor 37 accordingly. Further, due to the load increase, a force to compress the fluid pressure cylinder 36 acts on this fluid pressure cylinder 36 through the swing jaw 33 and other components, increasing the fluid pressure in the fluid pressure circuit.

For a transient increase in the load on the movable tooth 32 during crushing because a crushable object to be crushed has a property of being difficult to crush and is not crushed smoothly, the fluid pressure control means 39a of the control unit 39 performs, in response to an increase in fluid pressure in the fluid pressure circuit leading to the fluid pressure cylinder 36, the control of temporarily releasing, with the communicating fluid pressure circuit, a part of the working fluid to the space outside the flow path of the fluid pressure circuit to allow the fluid pressure cylinder 36 to operate in the contraction direction, thereby temporarily reducing the interval between the one end and the other end of the fluid pressure cylinder 36.

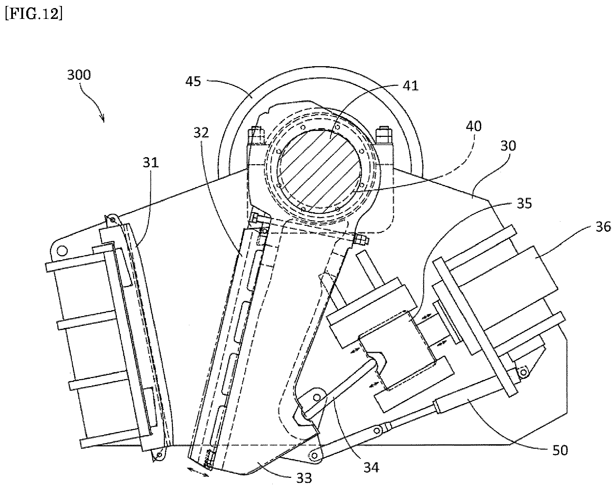

Such temporal reduction of the interval between the one end and the other end of the fluid pressure cylinder 36 allows the toggle block 35 and the swing jaw 33 linked thereto to be moved away from the immovable tooth 31 to temporarily reduce the interval between the immovable tooth 31 and the movable tooth 32 (see FIG. 12), thereby reducing the load acting on the movable tooth as a reaction force from the object to be crushed, and changing the positional relationship between the object to be crushed and the immovable and movable teeth 31, 32. This can facilitate the crushing of the object to be crushed.

When the object to be crushed that has not been crushed is crushed and the load on the movable tooth 32 is reduced, the reaction force from the object to be crushed against the movement of the movable tooth 32 and the swing jaw 33 returns to its original state. As a result, the force to compress the fluid pressure cylinder 36 from the setting state does not act as much as before and the fluid pressure decreases in the fluid pressure circuit, causing the fluid pressure control means 39a to promptly return the released part of the working fluid to the flow path of the fluid pressure circuit and bring the interval between the one end and the other end of the fluid pressure cylinder 36 back to its original state. Along with this, the interval between the immovable tooth 31 and the movable tooth 32 also returns to the initial setting state.

In this case, the fluid pressure control means 39a controls the working fluid to temporarily reduce the interval between the one end and the other end of the fluid pressure cylinder 36, in response to the transient increase in the load on the movable tooth 32, and to reduce the load, so that the current value of the electric motor 37 detected by the electric motor control means 39b does not reach the state that satisfies the condition corresponding to overload, and the electric motor 37 does not stop.

On the other hand, when the load on the movable tooth 32 increases due to the presence of uncrushable foreign object between the immovable tooth 31 and the movable tooth 32 during crushing, the electric motor control means 39b of the control unit 39 continues the drive of the electric motor 37 while the current value of the electric motor 37 detected in the electric motor control means 39b does not satisfy the condition corresponding to the situation where the movable tooth is overloaded.

Then, when determining that the detected current value of the electric motor 37 has reached the point where the condition corresponding to the overload is satisfied, the electric motor control means 39b stops the drive of the electric motor 37. Note that at this time, the electric motor control means 39b also stops the feeder to prevent the object to be crushed from being supplied to the crushing device 300.

Further, the fluid pressure control mechanism section 39c of the control unit 39 operates the fluid pressure motor 38 to rotate the rotation shaft 40 in forward and reverse directions with this fluid pressure motor 38 to move the swing jaw 33, repeatedly changing the interval between the immovable tooth 31 and the movable tooth 32 (see FIG. 14). Thus, the foreign matter that remains between the immovable tooth 31 and the movable tooth 32 and causing the state of overload is easily removed from between the immovable tooth 31 and the movable tooth 32.

When the foreign matter has been removed from between the immovable tooth 31 and the movable tooth 32 by such forward and reverse rotation of the fluid pressure motor 38, the crushing device operates the fluid pressure motor 38 as in the case when the operation related to the crushing is started, and then operates the electric motor 37, and resumes supply of an object to be crushed by the feeder, returning to the crushing work state.

When the foreign matter is not removed from between the immovable tooth 31 and the movable tooth 32 by the movement of the movable tooth 32 accompanying the forward and reverse rotational drive of the fluid pressure motor 38, the fluid pressure control mechanism section 39c of the control unit 39 controls the fluid pressure of each flow path connected to the fluid pressure cylinder 36 in the fluid pressure circuit to operate the fluid pressure cylinder 36 in the contraction direction, thereby reducing the interval between the one end and the other end of the fluid pressure cylinder 36. In this case, the interval between the one end and the other end of the fluid pressure cylinder 36 is made smaller than in the case of the transient load increase caused by the crushable object to be crushed not being crushed smoothly.

Thus reducing the interval between the one end and the other end of the fluid pressure cylinder 36 and moving the toggle block 35 and the swing jaw 33 linked thereto away from the immovable tooth 31 cause the interval between the immovable tooth 31 and the movable tooth 32 to be increased, making it easier to remove the foreign matter from between the immovable tooth 31 and the movable tooth 32 (see FIG. 15). When the foreign matter is not discharged from the discharge port located at the lower end of the space between the immovable tooth 31 and the movable tooth 32, it may be possible to stop the fluid pressure motor 38 in advance to stop the movement of the swing jaw 33 and the movable tooth 32, and subsequently take out the foreign matter from the upper side of the space between the immovable tooth 31 and the movable tooth 32.

When the foreign matter has been discharged from between the immovable tooth 31 and the movable tooth 32, and when the interval between the one end and the other end of the fluid pressure cylinder 36 has been reduced, the fluid pressure control mechanism section 39c of the control unit 39 controls the fluid pressure of each flow path connected to the fluid pressure cylinder 36 in the fluid pressure circuit so as to restore the original interval, and operates the fluid pressure cylinder 36 in an extension direction to restore the interval between the immovable tooth 31 and the movable tooth 32 to the setting state during crushing work. Then, as in the case when the operation related to the crushing is started, the fluid pressure motor 38 drives the rotation shaft 40, and when the rotation shaft 40 reaches an appropriate rotation speed, the state of the rotational drive of the rotation shaft 40 by the fluid pressure motor 38 is switched to the state of the rotational drive of the rotation shaft 40 by the electric motor 37, restoring the operation state during crushing in which the swing jaw 33 moves, along with the rotation of the rotation shaft 40, toward and away from the immovable tooth 31 together with the movable tooth 32. Then, supply of the object to be crushed between the immovable tooth 31 and the movable tooth 32 by the feeder is also restarted to restore the crushing work state.

In the crushing device 300, the electric motor control means 39b of the control unit 39 detects the current value of the electric motor 37 during crushing, and for a transient increase in the load on the movable tooth 32 because a crushable object to be crushed has a property of being difficult to crush and is not crushed smoothly, the fluid pressure control means 39a of the control unit 39 temporarily reduces the interval between the one end and the other end of the fluid pressure cylinder 36, thereby reducing the load and preventing the electric motor 37 from being stopped. Further, for an increase in the load on the movable tooth 32 due to the presence of uncrushable foreign matter, the current value of the electric motor 37 detected by the electric motor control means 39b will satisfy the condition corresponding to the overload, and the electric motor control means 39b will stop the electric motor 37.

Thus, the foreign object, which is mainly metal, can be detected accurately based on the current value of the electric motor 37 and collected from the crushing device 300 that has interrupted crushing due to the stop of the electric motor 37, avoiding the outflow of the metal foreign matter to the rear stage side of the crushing device. If a secondary crushing device is used in the next process after the crushing device, the crushing device can serve, so to speak, as a metal detector, preventing metal foreign matter from being put in the secondary crushing device. This eliminates the need for providing a metal detector between the crushing device and the secondary crushing device to protect the secondary crushing device, and allows cost reduction in the entire crushing process.

Note that, when the current value of the electric motor 37 detected by the electric motor control means 39b satisfies the above condition corresponding to overload, the control unit 39 stops the drive of the electric motor 37, and on the other hand, newly operates the fluid pressure motor 38, causing the fluid pressure motor 38 to rotate the rotation shaft 40 in forward and reverse directions to move the swing jaw 33, thus repeatedly changing the interval between the immovable tooth 31 and the movable tooth 32. However, the present invention is not limited to this control. When it is expected from the beginning of overload recognition that foreign matter would be extremely hard to discharge from between the immovable tooth 31 and the movable tooth 32 if the swing jaw 33 and the movable tooth 32 were moved by the drive of the fluid pressure motor 38, it may also be possible that the control unit 39 does not operate the fluid pressure motor 38, and at the same time as or immediately after the drive of the electric motor 37 is stopped, controls by the fluid pressure control mechanism section 39c the fluid pressure of each flow path connected to the fluid pressure cylinder 36 in the fluid pressure circuit, thereby reducing the interval between the one end and the other end of the fluid pressure cylinder 36, and moving the swing jaw 33 away from the immovable tooth 31 to increase the interval between the immovable tooth 31 and the movable tooth 32, and thus making it easier to remove the foreign matter from between the immovable tooth 31 and the movable tooth 32.

Further, it may also be possible that the electric motor control means 39b detects a state in which the current value of the electric motor 37 satisfies the condition corresponding to the overload, and stops the drive of the electric motor 37, and separately from this, the fluid pressure control mechanism section 39c of the control unit 39 performs, when the fluid pressure in the fluid pressure circuit leading to the fluid pressure cylinder 36 increases to a predetermined upper limit value due to an increase in load, control to release the fluid pressure to the low pressure side, thereby reducing the interval between the one end and the other end of the fluid pressure cylinder 36, and increasing the interval between the immovable tooth 31 and the movable tooth 32 to facilitate the removal of the foreign matter. In this case, for example, a relief valve may be provided in the fluid pressure circuit leading to the fluid pressure cylinder 36, as a main part of the fluid pressure control mechanism section 39c, and when the fluid pressure increases and exceeds a set pressure, the relief valve may be operated to release the fluid pressure to the low pressure side, or a predetermined fluid control means may be provided in the fluid pressure circuit to perform a control operation to release the fluid pressure to the low pressure side when the fluid pressure reaches the upper limit value. Controlling by the fluid pressure control mechanism 39c based on the fluid pressure that changes by following a change in load without delay, makes it possible to take effective and quick measures against an abnormal state, such as automatically increasing the interval between the immovable tooth 31 and the movable teeth 32, with respect to the load increase due to the foreign matter during crushing.

In this way, in the crushing device according to the present embodiment, when the load on the movable tooth 32 that moves during crushing increases due to a crushable object to be crushed or uncrushable foreign matter that has entered between the immovable tooth 31 and the movable tooth 32, the swing jaw 33 is displaced by the fluid pressure cylinder 36 serving as the adjustment unit to increase the interval between the immovable tooth 31 and the movable tooth 32, thereby suppressing further increase in load and allowing crushing of the object to be crushed or discharging of foreign matter, and after completion of such crushing or discharging, the interval between the immovable tooth 31 and the movable tooth 32 is returned to its original state by the fluid pressure cylinder 36, allowing the crushing to be continued. Consequently, in the case of the crushable object to be crushed, it is possible to prevent the device from being stopped due to the load increase and quickly return the movable tooth 32 to its original state by the motion of the fluid pressure cylinder 36, keeping the size of the crushed materials obtained by the crushing to a desired size without problems, and performing crushing work efficiently and accurately. Further, in the case where the uncrushable foreign matter causes the increase in load to lead to overload, it is possible to increase the interval between the immovable tooth 31 and the movable tooth 32 by the fluid pressure cylinder 36 and, after the foreign matter is discharged, quickly return the interval between the movable tooth 31 and the movable tooth 32 to its original state by the fluid pressure cylinder 36, minimizing interruption of the crushing to suppress loss and preventing outflow of large uncrushed objects to be crushed.

Note that in the crushing device according to the present embodiment, when the load on the movable tooth 32 increases, the electric motor control means 39b continues the drive of the electric motor 37 while the current value of the electric motor 37 detected by the electric motor control means 39b of the control unit 39 does not satisfy the condition corresponding to an overload on the movable tooth 32, and the control unit 39 does not perform any particular control other than the control on the fluid pressure circuit side until the detected current value satisfies the condition corresponding to the overload and the drive of the electric motor 37 is stopped. However, the present invention is not limited to this configuration. Another configuration may be possible in which the electric motor control means of the control unit has a predetermined current value that is a value of current flowing through the electric motor in a state where the load on the movable tooth has increased and that is smaller than the current value when the above condition corresponding to the overload situation is satisfied, set in advance as a second threshold value, and continues the drive of the electric motor and stops the feeder that supplies the object to be crushed to the crushing device when the current value of the electric motor detected by the electric motor control means exceeds such a second threshold.

In this case, when the load on the movable tooth increases due to an object to be crushed that is difficult to crush or uncrushable foreign matter, and the current value of the electric motor detected by the electric motor control means exceeds the second threshold, supply of the object to be crushed to the crushing device by the feeder is first stopped. For the object to be crushed that is difficult to crush, the supply of the object to be crushed by the feeder is restarted when the object to be crushed has been crushed and the current value of the electric motor has fallen below the second threshold value according to a decrease in the load on the movable tooth. On the other hand, for the foreign matter, the drive of the electric motor is stopped when the foreign matter cannot be crushed, the load further continues to increase, and the current value satisfies the condition corresponding to an overload. Then, supply of the object to be crushed between the immovable tooth and the movable tooth by the feeder is resumed when the foreign matter is discharged from between the immovable tooth and the movable tooth, and the operating state during crushing in which the swing jaw moves toward and away from the immovable tooth together with the movable tooth by the rotation shaft being rotationally driven by the electric motor.

In this way, when the current value of the electric motor detected by the electric motor control means exceeds the second threshold value even if it does not satisfy the condition corresponding to an overload, the drive of the motor is not stopped, but the feeder is stopped to interrupt the supply of the object to be crushed. This causes no more object to be crushed to be supplied between the immovable tooth and the movable tooth during the increase in the load on the movable tooth and the delay in the progress of crushing the object to be crushed, making it possible to intensively crush the object to be crushed that is difficult to crush or discharge the foreign matter, either one being the cause of the load increase, and quickly proceed with crushing or discharging without being affected by an object to be crushed that is supplied later. This allows the increased load to be resolved in a shorter time and the crushing work to be continued or restarted.

Besides this, for the feeder, another configuration instead of performing stop control based on the current value of the electric motor detected by the electric motor control means may be possible in which a pressure (toggle pressure) applied to the fluid pressure cylinder that holds the position of the toggle block is monitored, and the feeder is stopped when the pressure applied to the fluid pressure cylinder exceeds a predetermined threshold value due to a load increase caused by an object to be crushed that is difficult to crush or uncrushable foreign matter. In this case, it is possible to stop the feeder at a more appropriate timing based on the fact that the pressure clearly increases in the fluid pressure circuit in response to the load increase, allowing the supply by the feeder to be adjusted appropriately to the crushing device situation and thus the crushing device to safely continue crushing.

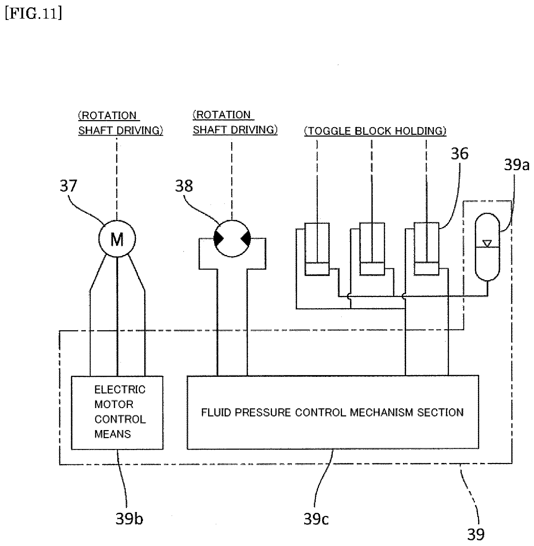

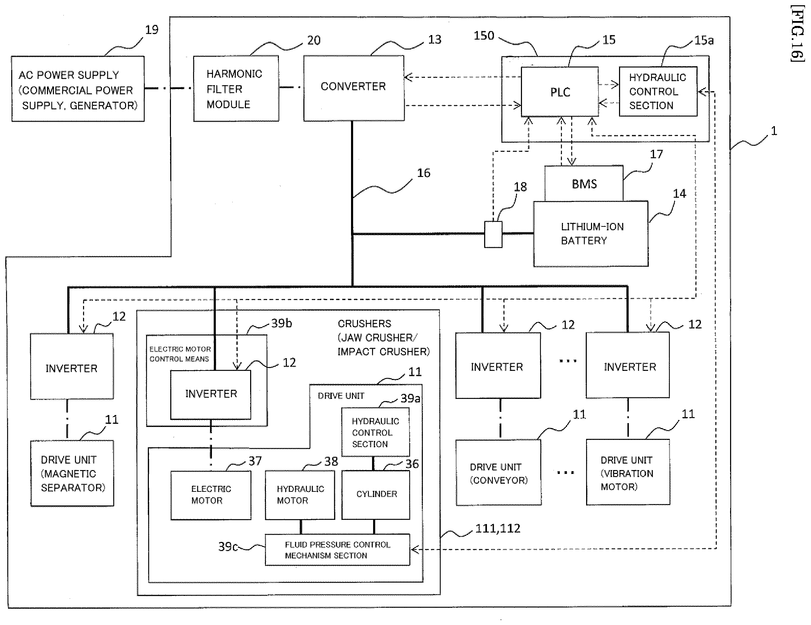

FIG. 16 is a system configuration diagram of the control system 1 when the above crushing device 300 is used. In FIG. 16, the system configuration includes a jaw crusher 111 and an impact crusher 112 as a specific example of the crusher in the corresponding drive unit 11. As shown in FIG. 11, the drive unit 11 of the jaw crusher 111 and the impact crusher 112 as the crushing device 300 includes the electric motor 37 controlled by the inverter 12 which is the electric motor control means 39b, as well as the fluid pressure control mechanism section 39c that controls a hydraulic motor 38, a cylinder 36, and a hydraulic control section 39a.

Further, the operation of the jaw crusher 111 and the impact crusher 112 in the control system 1 is controlled by an operation control unit 150. In particular, the electric motor 37 is operated by the corresponding inverter 12 based on the control signal from the PLC 15 as described above, and the hydraulic system control is performed by the operation of the fluid pressure control mechanism section 39c based on the control of the hydraulic control section 15a.

Note that, as shown in FIG. 16, the crushing device 300 such as the jaw crusher 111 and the impact crusher 112 may be controlled throughout the system by the operation control unit 150 (PLC 15 and/or hydraulic control section 15a), or as shown in FIG. 11, a configuration may be adopted in which the electric motor control means 39b and the fluid pressure control mechanism section 39c are separately provided for the individual respective devices.

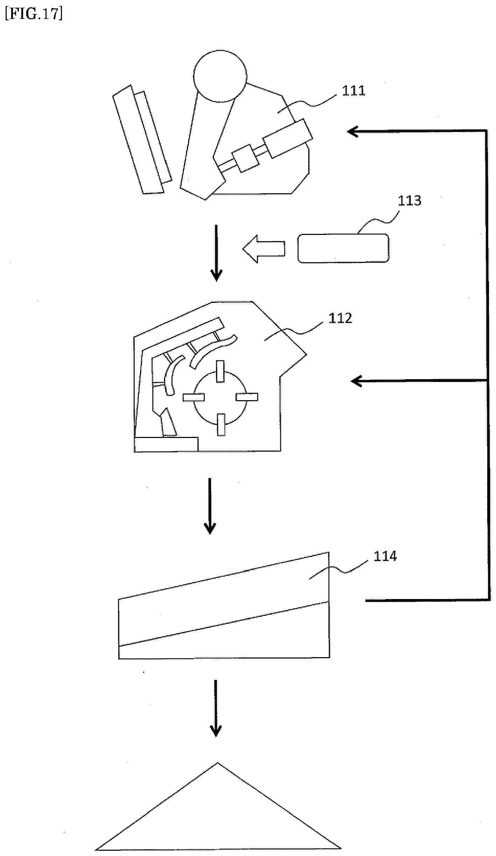

A control method using the control system 1 according to the present embodiment will be described using a specific example. FIG. 17 is a diagram showing a control method using the control system according to the present embodiment. In FIG. 17, objects to be crushed such as stone, concrete waste, and asphalt waste are fed into the jaw crusher 111 from the feeder (not shown), and materials that have reached a certain size are fed into the impact crusher 112 through a metal detector 113. Materials crushed to a desired size by the impact crusher 112 are collected through a screen 114 as a product. Materials that have not met the desired size and have not passed through the screen 114 are returned to the jaw crusher 111 or the impact crusher 112 again, and the crushing work is repeated. The jaw crusher 111 has the adjustment means for adjusting the gap between the immovable tooth 31 and the movable tooth 32 according to the load, as described above. Similarly, the impact crusher 112 may also have a means for adjusting the gap (set value) for passing the crushed materials. When foreign matter such as metal that is difficult to crush is mixed, the jaw crusher 111 can increase the gap between the immovable tooth 31 and the movable tooth 32 to discharge the foreign matter such as metal, by adjusting the set value as described above. Since the discharged foreign matter such as metal is detected by the metal detector 113, the set value is controlled to a maximum value in the impact crusher 112 according to the reaction of the metal detector 113. This allows the foreign matter such as metal to pass through without colliding with internal parts, such as a rotor, a striker, and a repulsion plate, of the impact crusher 112, preventing the internal parts from being broken.

Further, it is also possible to control the entire system shown in FIG. 17 to be optimized. Specifically, a set value, a rotation speed, and the like of each crusher are controlled to optimal values according to the load values of the return conveyor and the respective crushers. That is, when the load on the jaw crusher 111 is small and the load on the impact crusher 112 is large, such an adjustment is performed that the rotation speed and the set value of the jaw crusher 111 is adjusted to achieve finer crushing, thereby reducing the load on the impact crusher 112, while in the impact crusher 112, the load will be smaller than it is now, so that the rotation speed is reduced and the set value is increased, for example. Further, when the amount of crushed material returned from the screen 114 is large, such an adjustment is performed that the rotation speed of the motor of each crusher is increased, thereby generating finer crushed materials, for example. Besides these, such adjustments are performed that when the amount of crushed material generated is small, the overall load is increased, and when the size of crushed material generated is too large or too small, the set value of each crusher is changed. Optimizing the entire system in addition to controlling each crusher in this way makes it possible to produce crushed materials of stable quality and quantity.

### Reference Signs List

- 1: Control system
- 11: Drive unit
- 11a: IPM motor
- 12: Inverter
- 13: Converter
- 14: Lithium-ion battery
- 15: PLC
- 15a: Hydraulic control unit
- 16: DC bus
- 17: BMS
- 18: Measurement unit
- 19: AC power supply
- 20: Harmonic filter module
- 21: Capacity input information
- 22: Information acquisition section
- 23: Drive control section
- 24: Battery control section
- 25: Calculation section
- 30: Main body frame
- 31: Immovable tooth
- 32: Movable tooth
- 33: Swing jaw
- 34: Toggle plate
- 35: Toggle block
- 36: Fluid pressure cylinder
- 37: Electric motor
- 38: Fluid pressure motor
- 39: Control unit
- 39a: Fluid pressure control means
- 39b: Electric motor control means
- 39c: Fluid Pressure control mechanism section
- 40: Rotation shaft
- 41: Eccentric shaft part
- 45: Flywheel
- 50: Tension rod
- 150: Operation control unit
- 300: Crushing device

## Claims

1. A control system comprising:
a drive unit that drives construction equipment;
an inverter that is connected to the drive unit and converts power to be supplied to the drive unit;
a converter that receives power for driving the drive unit from an AC power supply and converts the received power into DC power;
a secondary battery that charges the DC power converted by the converter according to a drive state of the drive unit or supplies power to the drive unit according to the drive state of the drive unit;
a programmable logic controller (PLC) that sets a conversion voltage of the converter based on a state of the secondary battery and an output capacity of the AC power supply.

2. The control system according to claim 1, wherein
the secondary battery is a lithium-ion battery, and
the PLC sets the conversion voltage of the converter to a voltage value within a range where a voltage of the lithium-ion battery is less likely to fluctuate.

3. The control system according to claim 1 or 2, wherein
the PLC calculates and sets an upper limit value of the conversion voltage of the converter based on an output capacity of the AC power supply.

4. The control system according to claim 3, wherein
the secondary battery supplies power to the drive unit when a power consumption of the drive unit exceeds the upper limit value of the conversion voltage of the converter.

5. The control system according to claim 1 or 2, wherein
the PLC performs balance control between modules of the secondary battery when the drive unit is in a no-load condition.

6. The control system according to claim 1 or 2, further comprising:
an interior permanent magnet (IPM) motor that drives the drive unit of the construction equipment according to a rapid fluctuation in a load on the construction equipment, wherein
the secondary battery is connected to the inverter with a DC bus, and has a feeding region for supplying power to the drive unit and a protective charging region for absorbing regenerative energy from the drive unit due to the rapid load fluctuation to protect the inverter.

7. The control system according to claim 6, further comprising:
a voltage adjustment means for adjusting the feeding region and the protective charging region of the secondary battery with a voltage value of the DC bus.

8. The control system according to claim 6, wherein
setting of a frequency and/or a voltage value for the inverter to control the IPM motor is adjusted to an upper limit value.

9. The control system according to claim 6, wherein
the drive unit driven by the IPM motor is a flywheel of a crusher, and
regenerative energy due to a load fluctuation applied to a crushing tooth driven in accordance with operation of the flywheel is absorbed by the secondary battery.

10. The control system according to claim 1 or 2, wherein
the construction equipment includes a crushing device, the crushing device being a jaw crusher, the jaw crusher comprising:
an immovable tooth that is fixed to a main body frame;
a movable tooth that is disposed opposite to the immovable tooth; and
a swinging jaw to which the movable tooth is attached and that is at least swingably disposed on the main body frame, wherein
the movable tooth is moved together with the swing jaw relative to the immovable tooth to crush an object to be crushed that is put between the immovable tooth and the movable tooth, and
the crushing device comprising:
an adjustment unit that positions a movable range of the swing jaw relative to the main body frame and enables an interval between the immovable tooth and the movable tooth to be adjusted; and
a control unit that controls at least the adjustment unit in response to a fluctuation of a load on the movable tooth during crushing, wherein
the control unit controls at least the adjustment unit to increase the interval between the immovable tooth and the movable tooth when the load on the movable tooth increases due to a crushable object to be crushed or an uncrushable foreign object, and returns the adjustment unit to its original state after the object to be crushed is crushed or after the foreign object is removed from between the immovable tooth and the movable tooth, either object being cause of the load increase.

11. The control system according to claim 10, further comprising:
an electric motor that moves the swing jaw and the movable tooth; and
a fluid pressure motor that is capable of moving the swing jaw separately from the electric motor, wherein
when the load on the movable tooth increases due to the uncrushable foreign object, the control unit stops drive of the swing jaw by the electric motor, and causes the fluid pressure motor to rotate in forward and reverse directions to move the swing jaw, repeatedly changing the interval between the immovable tooth and the movable tooth, thereby allowing the foreign object causing the load increase between the immovable tooth and the movable tooth to be easily removed from between the immovable tooth and the movable tooth, before the interval between the immovable tooth and the movable tooth is increased by the adjustment unit.

12. The control system according to claim 10, wherein
the adjustment section is a fluid pressure cylinder disposed at a predetermined location opposite to a side where the immovable tooth is located with respect to the swing jaw, the swing jaw being positioned by changing the interval between one end and the other end of the fluid pressure cylinder, allowing the interval between the immovable tooth and the movable tooth to be adjusted, and
the control unit reduces the interval between the one end and the other end of the fluid pressure cylinder as the adjustment unit to move the swing jaw and increase the interval between the immovable tooth and the movable tooth when the load on the movable tooth increases, and returns the fluid pressure cylinder to its original state after the object to be crushed is crushed or after the foreign object is removed from between the immovable tooth and the movable tooth, either object being cause of the load increase.

13. The control system according to claim 12, wherein
the control unit comprises:
a fluid pressure control means for controlling a fluid in a fluid pressure circuit leading to the fluid pressure cylinder while accompanying temporal reduction of the interval between the one end and the other end of the fluid pressure cylinder to enable reduction of the load on the movable tooth when the load on the movable tooth increases, and a force to reduce the interval between the one end and the other end of the fluid pressure cylinder through the swing jaw increases, and a fluid pressure in the fluid pressure circuit leading to the fluid pressure cylinder increases; and
an electric motor control means for detecting a current flowing through the electric motor, and stopping drive of the electric motor when the detected current value satisfies a predetermined condition set in advance corresponding to a situation where the uncrushable foreign object enters between the immovable tooth and the movable tooth to overload the movable tooth, and on the other hand, continuing the drive of the electric motor when the detected current value does not satisfy the predetermined condition, and
the fluid pressure control means controls, when the load on the movable tooth increases transiently due to the crushable object to be crushed, the fluid in the fluid pressure circuit leading to the fluid pressure cylinder to temporarily reduce the interval between the one end and the other end of the fluid pressure cylinder to such an extent that the current value of the electric motor detected by the electric motor control means does not reach a state that satisfies the predetermined condition.

14. The control system according to claim 10, wherein
an electric motor control means of the control unit has a predetermined current value that is a value of current flowing through an electric motor in a state where the load on the movable tooth has increased and that is smaller than a current value when a condition corresponding to an overload situation is satisfied, set in advance as a second threshold value, and
the electric motor control means detects the value of current flowing through the electric motor, and when the detected current value does not satisfy the condition and exceeds the second threshold value, continues drive of the electric motor and stops a feeder that supplies the object to be crushed to the crushing device.
